# EUROPEAN PATENT APPLICATION

(11) **EP 2 187 691 A1**
(43) Date of publication of application: **19.05.2010**
(21) Application number: 08168961.4
(22) Date of filing: 12.11.2008
(51) Int. Cl.: H04W 72/04, H04W 72/14

(54) **A method for radio communication between a base station and a user terminal using transmission on component carriers based on control information, as well as a base station, a user terminal and a communication network therefor**

(71) Applicant: Alcatel Lucent, 75008 Paris (FR)
(72) Inventor: Gerlach, Christian Georg, 71254, Ditzingen (DE)
(74) Representative: Urlichs, Stefan

(57) **Abstract**

The invention concerns a method for radio communication between a base station (BS) and a user terminal (UE) using transmission on component carriers, wherein at least one primary component carrier (DLp) is assigned to the user terminal (UE) for communication with the base station (BS), and based on a transmission of control information to the user terminal (UE) on said at least one primary component carrier (DLp), the user terminal (UE) is supported to communicate on at least one auxiliary component carrier (DL1-DLn, UL1-ULm) with the base station (BS), a base station, a user terminal and a communication network therefor.

## Description

The invention relates to a method for radio communication between a base station and a user terminal according to the preamble of claim 1, a base station according to the preamble of claim 9, a user terminal according to the preamble of claim 10 and a communication network according to the preamble of claim 11.

A spectral band used for multi-cell radio transmission is normally called a carrier. In carrier aggregation scenarios, as e.g. for frequency division duplex (FDD), it is envisaged that the downlink transmission and the uplink transmission to and from a user terminal can happen over multiple consecutive or non-consecutive carriers, which are called component carriers.

The component carriers that are used for uplink or downlink transmission can be composed of subcarriers or code waveforms. The subcarriers are e.g. used in Orthogonal Frequency Division Multiplexing (OFDM) radio systems.

Orthogonal Frequency Division Multiplexing radio systems are currently under discussion for many standards as e.g. for Third Generation Partnership Project Long Term Evolution advanced (3GPP LTE-advanced), or the WIMAX standard IEEE 802.16 (WIMAX = Worldwide Interoperability for Microwave Access).

OFDM is a multi-carrier modulation technique. The data is distributed on a large number of closely spaced subcarriers. Several bits of a bit stream are mapped on one subcarrier by modulating the complex amplitude by e.g. QPSK (QPSK = Quadrature Phase Shift Keying), 16-QAM or 64-QAM (QAM = Quadrature Amplitude Modulation).

For the communication between a base station and a user terminal, dedicated downlink component carriers are used in combination with dedicated uplink component carriers. Said combinations of dedicated downlink component carriers with dedicated uplink component carriers are called self contained units, if resource addressing by a control channel on the downlink component carriers in the self contained unit allows only addressing of resources inside the same self contained unit.

The scheduling of downlink and uplink data transmission is done over the downlink control channel that can be distributed over the downlink carrier bandwidth, i.e. the bandwidth of the dedicated downlink component carriers that are assigned to the communication between the base station and the user terminal. With this control channel a resource allocation for data transmission exactly inside said dedicated downlink component carriers or said dedicated uplink component carriers is done.

In normal mode of multi-user scheduling multiple user terminals or groups of user terminals are distributed over e.g. multiple 20 MHz component carriers since the spectrum has to be distributed between the user terminals.

If the component carriers that are used by a user terminal are farther apart in frequency, the user terminal will need different radio receive and transmit branches, e.g. different power amplifiers, in order to be able to communicate by means of the component carriers.

However, for user terminals it is not economic that they receive all the time on all radio parts and that they transmit all the time on all radio parts since this is energy consuming. There may be e.g. different power amplifiers for the different transmit branches that should be ramped up for energy saving reasons only when they are used.

Thus, the object of the invention is to indicate to the user terminals in a resource efficient way on which frequencies the user terminals shall receive or transmit.

This object is achieved by a method according to the teaching of claim 1, a base station according to the teaching of claim 9, a user terminal according to the teaching of claim 10 and a communication network according to the teaching of claim 11.

The main idea of the invention is that at least one primary component carrier is assigned to a user terminal for communication with a base station, and based on a transmission of control information to the user terminal on said at least one primary component carrier, the user terminal is supported to communicate on at least one auxiliary component carrier with the base station.

In other words, one or multiple primary component carriers are assigned to a user terminal, and further component carriers will function then as auxiliary component carriers for the user terminal. The activation, reception and transmission of the at least one auxiliary component carrier for the user terminal is made dependent on the control channel decoding of a grant on the at least one primary component carrier or a received configuration command on the at least one primary component carrier.

Further developments of the invention can be gathered from the dependent claims and the following description.

In the following the invention will be explained further making reference to the attached drawings.
Fig. 1 schematically shows a cellular communication network in which the invention can be implemented.
Fig. 2 schematically shows a carrier aggregation for frequency division duplex (FDD) according to the state of the art with possibly different number of component carriers in downlink and uplink.
Fig. 3 schematically shows a carrier aggregation for frequency division duplex (FDD) according to the state of the art with asymmetric downlink/uplink configurations of self contained units.
Fig. 4 schematically shows principles of primary and auxiliary component carriers assigned to a user terminal according to the invention.

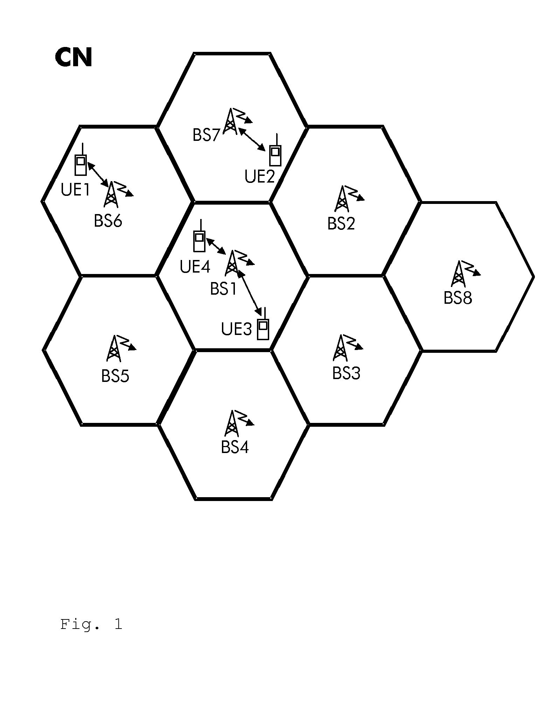

A communication network CN in which the invention can be implemented is depicted in fig. 1 and comprises user terminals UE1-UE4 and base stations BS1-BS8.

Each of said user terminals UE1-UE4 is connected to one or multiple of said base stations BS1-BS8, and the base stations BS1-BS8 are in turn connected to a core network which is not shown in fig. 1 for the sake of simplicity.

The user terminals UE1-UE4 comprise the functionality of a user terminal for transmission and reception in a communication network as e.g. a WIMAX or an OFDM network, i.e. they can be connected to a communication network by means of a base station.

Furthermore, a user terminal UE1-UE4 according to the invention comprises at least one processing means adapted to receive control information on at least one primary component carrier, and to support the user terminal UE1-UE4 to communicate on at least one auxiliary component carrier based on said control information.

The base stations BS1-BS8 comprise the functionality of a base station of a communication network as e.g. a WIMAX or an OFDM network, i.e. they serve the corresponding cells, and provide the possibility for user terminals UE1-UE4 to get connected to the communication network CN.

Furthermore, a base station BS1-BS8 according to the invention comprises at least one processing means adapted to assign at least one primary component carrier to a user terminal UE1-UE4 for communication with the base station BS1-BS8, and to transmit to the user terminal UE1-UE4 on said at least one primary component carrier control information that support the user terminal UE1-UE4 to communicate with the base station BS1-BS8 on at least one auxiliary component carrier.

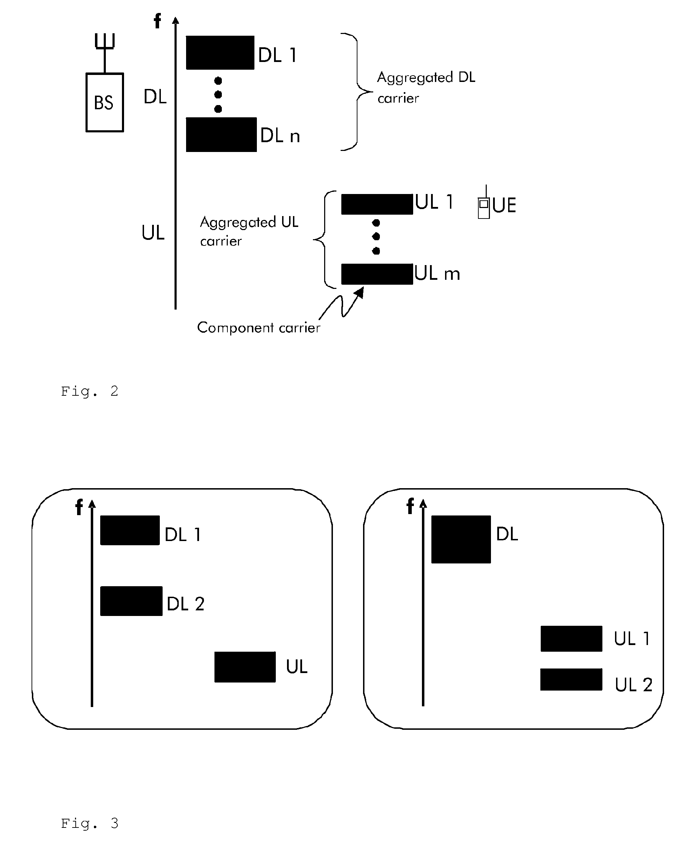

Fig. 2 shows the partition of radio frequencies along the frequency axis f that is used for radio communication between a base station BS and a user terminal UE. A spectral band used for multi-cell radio transmission is called a carrier. In carrier aggregation scenarios for frequency division duplex (FDD), it is envisaged that the downlink transmission and the uplink transmission to and from the terminal UE can happen over multiple consecutive or non-consecutive carriers, which are called component carriers as shown e.g. in fig. 2.

In the left part of fig. 2, it is shown that the component carriers DL1-DLn are aggregated and build together the downlink carrier used for transmission from the base station BS to the user terminal UE.

In the right part of fig. 2, it is shown that the component carriers UL1-ULm are aggregated and build together the uplink carrier used for transmission from the user terminal UE to the base station BS.

All component carriers DL1-DLn and UL1-Ulm are composed of subcarriers, which are e.g. used in Orthogonal Frequency Division Multiplexing (OFDM) or Worldwide Interoperability for Microwave Access (WIMAX) radio systems.

The scheduling of downlink and uplink data transmission is done over the downlink control channel which can be distributed over the downlink carrier bandwidth, i.e. the bandwidth of the downlink component carriers DL1-DLn that are assigned to the communication between the base station BS and the user terminal UE. With this downlink control channel a resource allocation is done for data transmission exactly inside said downlink component carriers DL1-DLn or said uplink component carriers UL1-ULm which build together the downlink and the uplink carrier used for communication between the base station BS and the user terminal UE.

A configuration with at least one downlink component carrier DL1-DLn and at least one uplink component carrier UL1-ULm for communication between a base station and a user terminal is called a self contained unit if the downlink control channel which is distributed over the downlink carrier bandwidth does not address component carriers outside said self contained unit.

According e.g. to the standard 3GPP LTE Release 8, the configuration is that one downlink component carrier DL1-DLn is paired exactly with one uplink component carrier UL1-ULm for communication between a base station and a user terminal, however it is also envisaged that asymmetric configurations with e.g. one downlink component carrier and two uplink component carriers or e.g. two downlink component carriers and one uplink component carrier will be supported. Those configurations can not fully be exploited or even can not be understood by 3GPP LTE Release 8 user terminals.

In fig. 3 two examples for such an asymmetric downlink/uplink configuration according to the state of the art are depicted.

In the left part of fig. 3, it is shown that two downlink component carriers DL1, DL2 and one uplink component carrier UL are used for communication between a base station and a user terminal.

In the right part of fig. 3, it is shown that one downlink component carrier DL and two uplink component carriers UL1, UL2 are used for communication between a base station and a user terminal.

Now using said self contained units, that can also be aggregated, the scheduling of downlink and uplink data transmission is done by using the downlink control channel inside each self contained unit again summarized as DL1 and UL1 - DLn and ULn which is assigned to the communication between the base station BS and the user terminal UE. With each downlink control channel a resource allocation is done for data transmission exactly inside the self contained unit.

For user terminals it is not economic that they receive all the time on all radio parts and that they transmit all the time on all radio parts since this is energy consuming. There may be e.g. different power amplifiers for the different transmit branches that should be ramped up for energy saving reasons only when they are used.

Furthermore, decoding of control channels in other component carriers outside of self contained units used for communication between a user terminal and a base station shall be reduced in effort, i.e. the number of blind decodings shall be reduced.

Thus, according to the invention it is indicated to the user terminals in a resource efficient way on which frequencies the user terminals shall receive or transmit. In order to reduce the number of blind decodings, it can be exploited that the user terminal UE is in the same pathloss condition for all component carriers.

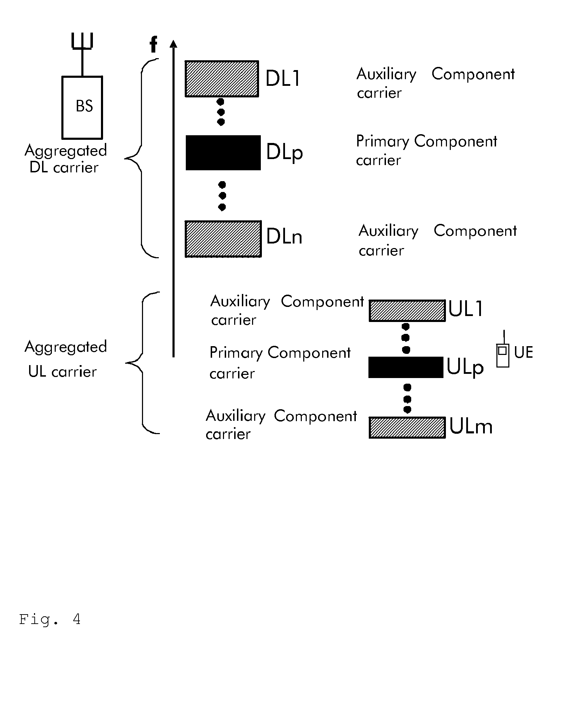

Fig. 4 shows the principles of a method according to the invention using primary and auxiliary component carriers which are assigned to a user terminal for communication with a base station.

Fig. 4 shows the partition of radio frequencies along the frequency axis f that is used for radio communication between a base station BS and a user terminal UE in a similar way as has been done in the prior art depicted in fig. 2.

In the left part of fig. 4, it is shown that an aggregated downlink carrier used for communication between a base station BS and a user terminal UE comprises a so-called primary component carrier DLp and so-called auxiliary component carriers DL1-DLn.

In the right part of fig. 4, it is shown that an aggregated uplink carrier used for communication between a base station BS and a user terminal UE comprises a so-called primary component carrier ULp and so-called auxiliary component carriers UL1-ULm.

In the embodiment depicted in fig. 4, for the sake of simplicity only one primary component carrier in uplink and downlink is shown. However, it is also possible, that the aggregated downlink or uplink carrier comprises more than one primary component carrier.

All component carriers DL1-DLn, DLp and UL1-Ulm, ULp can be composed of subcarriers, which are e.g. used in Orthogonal Frequency Division Multiplexing (OFDM) or Worldwide Interoperability for Microwave Access (WIMAX) radio systems.

In the method according to the invention, the user terminal UE gets one or more primary component carriers in uplink and downlink ULp, DLp or self contained units assigned by the base station to watch for decoding of control information, and dependent on whether there is a valid reception of control information for the user terminal UE on the downlink control channel which is distributed over the bandwidth of the downlink component carrier DLp or based on the contents of the decoded control information, the user terminal UE starts the reception branches of one or multiple other auxiliary downlink component carriers DL1-DLn, and preferably also starts the transmission branches of one or multiple other auxiliary uplink component carriers UL1-Ulm, and the user terminal UE tries to decode control information of said other auxiliary component carriers in downlink DL1-DLn.

In an embodiment of the invention, the user terminal UE is enabled to communicate on at least one auxiliary uplink or downlink component carrier UL1-Ulm or DL1-DLn after a defined time since the user terminal UE has received control information on at least one primary downlink component carrier DLp.

In other words, a defined number of subframes after a reception of a control channel of a primary component carrier DLp, a sleeping mode of reception and transmission on the auxiliary component carriers DL1-DLn and UL1-ULm will be terminated, and the user terminal UE is enabled to receive or transmit on said auxiliary component carriers DL1-DLn and UL1-ULm. As the auxiliary uplink or downlink component carriers are only activated when a traffic activity starts, energy is saved in the corresponding radio reception and transmission parts during the inactive times.

In an embodiment of the invention, the control information that is sent from the base station BS to the user terminal UE on said at least one primary downlink component carrier DLp contains an indication which at least one component carrier is used as said at least one auxiliary component carrier UL1-Ulm or DL1-DLn.

Said indication is e.g. an index, or a number of indices. Said index or indices describe in which other auxiliary components a user terminal UE shall start to look for control channels addressed to the user terminal UE.

In another embodiment of the invention, the at least one auxiliary component carrier UL1-Ulm or DL1-DLn is predefined and known to the user terminal UE.

In an embodiment of the invention, the encoding of control information performed in the base station BS is in a way that the user terminal UE can use the information obtained from the decoding process on the at least one primary downlink component carrier DLp to save computational effort when decoding control information on the at least one auxiliary downlink component carrier DL1-DLn.

For example, the base station BS can use for the encoding of control information on the at least one auxiliary downlink component carrier DL1-DLn the same code rate as for the encoding of control information on the at least one primary downlink component carrier DLp. Once the user terminal UE knows the code rate from the decoding process of control information on the at least one primary downlink component carrier DLp, the effort for the decoding process of control information on the at least one auxiliary downlink component carrier DL1-DLn is reduced, as only resource combinations with the code rate of control information on the at least one primary downlink component carrier DLp are used for the decoding process of control information on the at least one auxiliary downlink component carrier DL1-DLn.

To use the same code rate on both the primary and auxiliary component carriers makes sense, as it can be assumed that the pathloss conditions are nearly the same for all component carriers.

Thus, in a preferred embodiment of the invention, the base station BS encodes control information for said at least one auxiliary component carrier DL1-DLn with a code rate which lies within a defined range that includes the used code rate of control information of the at least one primary component carrier DLp, so that the user terminal UE needs only to decode control information on said at least one auxiliary component carrier that has a code rate of control information which lies inside said defined range.

Even if the radio reception and transmission branches of all component carriers are active in a given subframe, depending on the received control channel protection of the at least one primary component carrier DLp, the user terminal UE looks in the control information of the at least one auxiliary component carrier DL1-DLn also only for control channels with an approximately equal protection, since the same pathloss condition can be assumed for all component carriers.

For example, if on the primary component carrier DLp the user terminal UE decodes a control channel with 4 CCE channel bits (CCE = control channel element) and x bits payload, the code rate is *rₚ* = *x*/(4CCE). Thus, in the control channels of the at least one auxiliary component carrier DL1-DLn, the user terminal UE is only looking for combinations of bits of the payload *yₐ* and number of channel bits *Bₐ*CCE with a code rate *rₐ* = *yₐ*/(*Bₐ*CCE) inside a range *rₐ*∈[*rₚ*-δ*,rₚ*+δ]*,* with δ being a predefined value.

An addressing of frequencies in other component carriers outside the bandwidth of the dedicated downlink or uplink component carriers that contain the layer 1 or layer 2 control channel using the so-called cross signaling would require an introduction of new bigger resource allocation formats for said cross signaling which would lead to an additional blind decoding effort in the user terminal UE.

Compared to having no a priori information when using multiple downlink control channels in component carriers and compared to the application of said cross signaling, using the invention according to the embodiments described above saves many blind decodings of control information in the auxiliary component carrier DL1-DLn and thus reduces the complexity and computational effort in the user terminal UE.

## Claims

1. A method for radio communication between a base station (BS) and a user terminal (UE) using transmission on component carriers, **characterized in, that**
• at least one primary component carrier (DLp) is assigned to the user terminal (UE) for communication with the base station (BS),
• and based on a transmission of control information to the user terminal (UE) on said at least one primary component carrier (DLp), the user terminal (UE) is supported to communicate on at least one auxiliary component carrier (DL1-DLn, UL1-ULm) with the base station (BS).

2. A method according to claim 1, **characterized in, that** primary downlink and uplink component carriers are grouped into units of at least one primary downlink and uplink component carrier together used for duplex in frequency division duplex transmission, so that the units constitute self contained units, in which resource addressing by at least one control channel inside a self contained unit allows only addressing of resources of primary component carriers that are in the same self contained unit.

3. A method according to claim 1, **characterized in, that** after a defined time since the user terminal (UE) has received said control information, the user terminal (UE) is enabled to communicate on said at least one auxiliary component carrier (DL1-DLn, UL1-ULm).

4. A method according to claim 1, **characterized in, that** said control information contains an indication, which at least one component carrier is used as said at least one auxiliary component carrier (DL1-DLn, UL1-ULm).

5. A method according to claim 1, **characterized in, that** said at least one auxiliary component carrier (DL1-DLn, UL1-ULm) is predefined and known to the user terminal (UE).

6. A method according to claim 1, **characterized in, that** the encoding of control information performed in the base station (BS) is in a way that the user terminal (UE) can use the information obtained from the decoding process on the at least one primary component carrier (DLp) to save computational effort when decoding control information on the at least one auxiliary component carrier (DL1-DLn).

7. A method according to claim 6, **characterized in, that** the base station (BS) encodes control information for said at least one auxiliary component carrier (DL1-DLn, UL1-ULm) with a code rate which lies within a defined range that includes the code rate of control information of the at least one primary component carrier (DLp), so that the user terminal needs only to decode control information on said at least one auxiliary component carrier (DL1-DLn) that has a code rate of control information which lies inside said defined range.

8. A method according to claim 7, **characterized in, that** the user terminal (UE) only decodes control information on said at least one auxiliary component carrier (DL1-DLn) if the code rate of the control information lies within a defined range which includes the code rate of control information of the at least one primary component carrier (DLp).

9. A base station (BS) for radio communication between said base station and a user terminal using transmission on component carriers, said base station (BS) comprising at least one processing means that is adapted to assign at least one primary component carrier (DLp) to the user terminal (UE) for communication with the base station (BS) **characterized in, that** said at least one processing means is adapted to transmit to the user terminal (UE) on said at least one primary component carrier (DLp) control information that support the user terminal (UE) to communicate with the base station (BS) on at least one auxiliary component carrier (DL1-DLn, UL1-ULm).

10. A user terminal (UE) for radio communication between said user terminal (UE) and a base station (BS), said user terminal (UE) being assigned at least one primary component carrier (DLp) for communication with the base station (BS), and said user terminal (UE) comprising at least one processing means that is adapted to receive control information on said at least one primary component carrier (DLp) **characterized in, that** said at least one processing means is adapted to efficiently support the user terminal (UE) to communicate on at least one auxiliary component carrier (DL1-DLn, UL1-ULm) based on said control information.

11. A communication network (CN) comprising base stations (BS1-BS8) and user terminals (UE1-UE4) for radio communication between said base stations (BS1-BS8) and user terminals (UE1-UE4) using transmission on component carriers, said base stations comprising at least one processing means that is adapted to assign at least one primary component carrier (DLp) to the user terminals (UE1-UE4) for communication with the base stations (BS1-BS8), and said user terminals (UE1-UE4) comprising at least one processing means that is adapted to receive control information on said at least one primary component carrier (DLp) **characterized in, that**
• said at least one processing means of the base stations (BS1-BS8) is adapted to transmit to the user terminals (UE1-UE4) on said at least one primary component carrier (DLp) control information that support the user terminals (UE1-UE4) to communicate with the base stations (BS1-BS8) on at least one auxiliary component carrier (DL1-DLn, UL1-ULm),
• and said at least one processing means of the user terminals (UE1-UE4) is adapted to efficiently support the user terminals (UE1-UE4) to communicate on the at least one auxiliary component carrier (DL1-DLn, UL1-ULm) based on said control information.

## Amended claims

### Amended claims in accordance with Rule 137(2) EPC.

**6.** A method according to claim 1, **characterized in, that** the base station (BS) encodes control information for said at least one auxiliary component carrier (DL1-DLn, UL1-ULm) with a code rate which lies within a defined range that includes the code rate of control information of the at least one primary component carrier (DLp), so that the user terminal needs only to decode control information on said at least one auxiliary component carrier (DLl-DLn) that has a code rate of control information which lies inside said defined range , and the user terminal (UE) saves computational effort when decoding control information on the at least one auxiliary component carrier (DL1-DLn).

**9.** A user terminal (UE) for radio communication between said user terminal (UE) and a base station (BS), said user terminal (UE) being assigned at least one primary component carrier (DLp) for communication with the base station (BS), and said user terminal (UE) comprising at least one processing means that is adapted to receive control information on said at least one primary component carrier (DLp) **characterized in, that** said at least one processing means is adapted to support the user terminal (UE) to communicate on at least one auxiliary component carrier (DL1-DLn, ULl-ULm) based on said control information.

**10.** A communication network (CN) comprising base stations (BS1-BS8) and user terminals (UE1-UE4) for radio communication between said base stations (BS1-BS8) and user terminals (UE1-UE4) using transmission on component carriers, said base stations comprising at least one processing means that is adapted to assign at least one primary component carrier (DLp) to the user terminals (UE1-UE4) for communication with the base stations (BS1-BS8), and said user terminals (UE1-UE4) comprising at least one processing means that is adapted to receive control information on said at least one primary component carrier (DLp) **characterized in, that**
• said at least one processing means of the base stations (BS1-BS8) is adapted to transmit to the user terminals (UE1-UE4) on said at least one primary component carrier (DLp) control information that support the user terminals (UE1-UE4) to communicate with the base stations (BS1-BS8) on at least one auxiliary component carrier (DLl-DLn, ULl-ULm),
• and said at least one processing means of the user terminals (UE1-UE4) is adapted to support the user terminals (UE1-UE4) to communicate on the at least one auxiliary component carrier (DLl-DLn, ULl-ULm) based on said control information.
